# EUROPEAN PATENT SPECIFICATION

(11) **EP 2 718 076 B1**
(45) Date of publication and mention of the grant of the patent: **03.01.2018**
(21) Application number: 12823526.4
(22) Date of filing: 11.06.2012
(51) Int. Cl.: B29B 11/10, B29D 23/00, B29C 45/00, C08L 3/02, C08L 67/04, F16L 9/127

(54) **POLYMER COMPOSITION FOR MANUFACTURING BIODEGRADABLE ARTICLES AND PROCESS THEREOF**
POLYMERZUSAMMENSETZUNG ZUR HERSTELLUNG BIOLOGISCH ABBAUBARER ARTIKEL UND VERFAHREN DAFÜR
COMPOSITION DE POLYMÈRES POUR LA PRODUCTION D'ARTICLES BIODÉGRADABLES ET PROCÉDÉ CORRESPONDANT

(30) Priority: 09.06.2011 IN MM16992011
(43) Date of publication of application: 16.04.2014
(73) Proprietor: Essel Propack Ltd., Maharashtra 400 013 (IN)
(72) Inventor: ABHYANKAR, Chandrashekhar Ramchandra, Mumbai 400013 (IN); BANERJEE, Mrinal Kanti, Mumbai 400013 (IN)
(74) Representative: Jones, Nicholas Andrew
(86) International application number: PCT/IN2012/000409
(87) International publication number: WO 2013/024488

(56) References cited:
- EP-A1- 0 566 357
- US-A- 5 401 778
- US-A- 5 939 467
- US-A1- 2002 022 101
- US-A1- 2004 225 269
- US-A1- 2004 225 269
- US-A1- 2009 082 491
- US-A1- 2009 082 491
- Marcia Adriana ET AL: "Thermal and Mechanical Behavior of Injection Molded Poly(3-hydroxybutyrate)/Poly([epsilon]-cap rolactone) Blends", Materials Research, 1 March 2006 (2006-03-01), pages 25-27, XP055230494, Retrieved from the Internet: URL:http://www.scielo.br/pdf/mr/v9n1/28566 .pdf [retrieved on 2015-11-23] & "BIOCYCLE 189D-1 -Properties Applications: Injection", , 1 February 2001 (2001-02-01), XP055230502, Retrieved from the Internet: URL:http://www.biocycle.com.br/images/prop riedades_189d-1_ing.pdf [retrieved on 2015-11-23] & "Product data sheet", , 23 April 2009 (2009-04-23), XP055230509, Retrieved from the Internet: URL:http://www.tri-iso.com/documents/Perst orp_CAPA_6800_PDS.pdf [retrieved on 2015-11-23]

## Description

### TECHNICAL FIELD

The present disclosure relates to a polymer composition for manufacturing of bio-degradable articles. In particular, the polymer composition is for manufacturing bio-degradable sleeve and bio-degradable shoulder of a bio-degradable tube.

The present disclosure also relates to the process of manufacturing bio-degradable articles, such as bio-degradable tubes.

### BACKGROUND

Tubes are used in large quantities for the packaging and dispensing of various products, such as cosmetics, ointments, shampoo, toothpaste, ketchup, and the like. Such tubes are usually provided empty to the producer of the contents which the tube is meant to contain. Plastic Barrier Tubes (PBT) is one type of such tube, produced commercially and widely used for different kind of product storage. For long term and efficient storage of products, Such Tubes are manufactured with multiple layers of Polymers and different types of core (barrier) materials.

Since plastic provides many advantages over metal for packaging purposes, plastic tubes are extensively manufactured and used worldwide. However, with increasing environment awareness and more hazards like non-degradation, toxic release over thermal decomposition, etc., being identified for plastic and plastic material, alternate material for packaging are being searched. One of such material is bio-degradable plastic which provides similar physical properties of strength, light weight, durability of the container till the product life cycle, non-toxicity, light and heat resistance, inertness towards certain chemicals, etc. similar to that of plastic and also decomposes in natural aerobic and anaerobic environments.

US Patent 5,939,467 discloses a biodegradable polymer composition comprising: bio-degradable polymers; and a plasticizer. US Patent application 2007/0259584 discloses a bio-degradable composites comprising: a bio-degradable resin; and a fibrous cellulose-based aggregates, and a process of forming a bio-degradable polymer composite product. US 2009/082491 discloses a biodegradable polymer composition comprising polycaprolactone PCL bio-degradable polymer and poly(hydroxybutyrate) (PHB) bio-degradable polymer in the manufacture of injected food packages, injected packages for cosmetics, tubes, technical pieces and several injected products. Processes of tube manufacturing have evolved with time and nowadays, several manufacturing processes such as extrusion process and lamination process are utilized for the production of plastic tubes. Such processes produce the sleeve of a tube whereas, for the manufacturing and combining of shoulder to the sleeve, processes of molding, such as injection molding, compression moldings are used. Each process has certain associated raw material and application for which it provides best results. Further, for different applications, different processes are used. Although, the molding processes are used to complete the production of plastic tubes, the use of presently known processes for the production of bio-degradable tubes is neither wide-spread, nor well developed.

### SUMMARY

The present disclosure provides a bio-degradable polymer composition comprising: 30% to 50% (w/w) of an extrusion grade bio-degradable polymer; and 50% to 70% (w/w) of an injection molding grade bio-degradable polymer, wherein both the extrusion grade bio-degradable polymer and the injection grade bio-degradable polymer are starch based bio-degradable polymers. The bio-degradable polymer composition of the present disclosure is used for manufacturing bio-degradable article, such as bio-degradable tubes.

The present disclosure further provides a process for manufacturing of bio-degradable tube.

These and other features, aspects, and advantages of the present subject matter will become better understood with reference to the following description and appended claims. This summary is provided to introduce a selection of concepts in a simplified form. This summary is not intended to identify key features or essential features of the claimed subject matter, nor is it intended to be used to limit the scope of the claimed subject matter.

### DETAIL DESCRIPTION

Bio-degradable polymers show some physical properties similar to that of regular plastic; they also have certain properties, such as low melting temperature, poor tensile strength at high temperature, and poor solvent resistance which makes the process of bio-degradable items manufacture, such as bio-degradable tube, a difficult and challenging task.

The present disclosure provides a bio-degradable polymer composition comprising: 30% to 50% (w/w) of an extrusion grade bio-degradable polymer; and 50% to 70% (w/w) of an injection molding grade bio-degradable polymer. The bio-degradable polymer composition of the present disclosure is used for manufacturing bio-degradable article, such as bio-degradable tubes. Preferably, the extrusion grade bio-degradable polymer is in the range of 35% to 45% (w/w) of the composition and the injection molding grade bio-degradable polymer is in the range of 65% to 55% (w/w) of the composition.

An embodiment of the present disclosure provides a bio-degradable polymer composition comprising: 30% to 50% (w/w) of an extrusion grade bio-degradable polymer; 50% to 70% (w/w) of an injection molding grade bio-degradable polymer; and a biopolymer additive, in an amount of 4% to 10% (w/w) on the weight of the composition.

In accordance with the present disclosure, the extrusion grade bio-degradable polymer can be notably commercially available "GF 106/2" polymer from Biome Bioplastics UK; the injection molding grade biopolymer can be notably commercially available "GS 2189" from Biome Bioplastics UK. The biopolymer additive can also be notably commercially available biopolymer additives "Bioplast SHM" from Biome Bioplastics UK.

The "GF 106/2" is a 100% bio-degradable polymer with a specific gravity in range of 1.2 to 1.3 grams per square centimeter (gm/cm²). Further, the polymer "GF 106/2" may also have a melt flow index of 1 to 6 grams per/ 10 minutes, bulk density between 740-800 Kilogram per cubic meter (KG/m³), and vicat softening point of 65°C. The Grade "GF 106/2" is very sensitive to humidity and hence enough care has to be taken in storage.

The Injection molding 100% Bio-degradable Extrusion Grade, "GS 2189", in accordance with the present disclosure, have specific gravity in range of 1.2 to 1.3 grams per square centimeter (gm/cm²). Further, the polymer "GF 106/2" may also have a melt flow index of 20 to 40 grams per/ 10 minutes, bulk density between 880- 940 Kilogram per cubic meter (KG/m³), and vicat softening point 65°C. The Grade "GS 2189" is very sensitive to humidity and hence enough care has to be taken in storage.

Both the extrusion grade bio-degradable polymer and the injection grade bio-degradable polymer are starch based bio-degradable polymers.

A polymer blend composition comprising of two bio-degradable polymers is used to produce good quality bio-degradable tube shoulders by compression molding technology.

The bio-degradable polymers are blended in a pre-defined proportion for the process of manufacturing of tube sleeves and shoulders.

In an embodiment, a bio-degradable article can be made of the polymer composition.

In another embodiment, the bio-degradable article made of the polymer composition is a tube.

Generally, the process of injection molding is implemented to produce bio-degradable plastic tube shoulders. The process of injection molding is easy to implement, but the process is costlier than the other methods of molding, such as compression molding. Further, the bio-degradable polymers cost almost eight to ten times more than the normal plastic polymers. Further, injection molding technique involves heavy cost of tool manufacturing and operation. Moreover, the process of injection molding requires more time for the completion and often involves heavy material wastage. Therefore, the bio-degradable items, such as bio-degradable tubes produced through injection molding technique are expensive to produce. The properties such as low melting temperature, low melt flow index, and poor tensile strength at high temperatures make the production of bio-degradable tubes difficult through the known cheaper processes of molding, such as the compression molding.

Accordingly, the present invention provides method for manufacturing of bio-degradable tubes using modified compression molding techniques. Compression molding process is generally the most common process used to produce articles from thermosetting materials. In this process, material is squeezed in to its desired shape with help of heat and pressure.

A compression modeling technique uses preheated mold cavities along with preheated resin, such as plastic polymers for the molding purposes. Further, manufacturing of a tube involves production of a tube sleeve and a shoulder. The sleeve of a tube is an open cylindrical structure which forms the body of the tube into which the consumable item is filled at a later stage. The shoulder is the head of the tube with a small opening from which the consumable item can be extracted. The sleeve is fused with the shoulder using different techniques, such as injection molding, and compression molding to form a complete tube. It would be understood by those skilled in the art that the shoulder is fused on one open end of the cylindrical structure, whereas the second end of the structure is sealed after filling the tube with the consumable item.

The compression molding is used to manufacture the shoulder of a tube and also to fuse it with the sleeve of the tube. To manufacture a bio-degradable shoulder of the tube, an appropriate bio-degradable polymer or a blend of appropriate polymers is chosen based on the desired properties of the tube. Since compression molding does not require a large flow of polymer, a blend of bio-degradable material with suitable melt flow index is utilized. In one implementation, the blend composition of the two bio-degradable polymers for the production of tube shoulders may preferably include 35% to 45% (w/w) of an extrusion grade bio-degradable polymer, and 55% to 65% (w/w) of an injection molding grade bio-degradable polymer.

The present disclosure further provides a process of manufacturing the sleeve of the bio-degradable tube from the bio-degradable polymer composition comprising: heating the granules of bio-degradable polymer composition and passing it through a circular die; passing the heated bio-degradable polymer along a heated chamber to obtain a molten bio-degradable polymer; and forcing out the molten bio-degradable polymer from a small opening or a die in the desired shape of the finished product. The circular die is known as the extruder. The process of manufacturing of bio-degradable articles, such as tubes employing modified compression molding techniques. In the process of passing the heated (molten) bio-degradable polymer from the circular die, a long cylindrical hollow pipe of the bio-degradable polymer is formed.

According to an aspect of the present disclosure, the temperature of the extruder, to assure a proper flow of molten material is controlled. The temperature of the extruder at different zones is shown in the Table 1 to allow proper production of tube sleeves. Since, most of the bio-degradable materials at temperature greater than 200°C are not stable and may burned off, they are not suitable for the extrusion process at temperatures more than 200°C, Table 1 shows the temperature of the extruder between 145°C and 190°C. The hot sleeve forced out from the chamber of the extruder may then be cooled. The sleeve may be cooled by the use of a water tank.

**Table 1: Temperature of the extruder zone.**

| **Extruder zone** | **Temperature °C** |
|---|---|
| 1 | 145 |
| 2 | 155 |
| 3 | 155 |
| 4 | 155 |
| 5 | 170 |
| 6 | 170 |
| 7 | 170 |
| 8 | 175 |
| 9 | 185 |
| 10 | 185 |
| 11 | 190 |
| 12 | 190 |
| 13 | 190 |
| Melt temperature | 180 |

The long cylindrical hollow pipe may then be sliced into different sizes to form tube sleeves. Since the tensile strength of the bio-degradable polymers at high temperature is generally poor, the extruder cavity may be calibrated to form pipes with thickness based on the bio-degradable material. For example, for a bio-degradable material with comparatively low tensile strength, the thickness of the extruder cavity is increased to form tubes with more strength. In one preferred embodiment of the invention, the diameter of the extruder cavity ring (calibration ring) is kept in between 39.2 mm and 39.5 mm to obtain a 40 mm sleeve diameter for the tube.

Since the tensile strength of the bio-degradable polymers at high temperature is generally poor, the extruder cavity may be calibrated to form pipes with thickness based on the bio-degradable material. For example, for a bio-degradable material with comparatively low tensile strength, the thickness of the extruder cavity is increased to form tubes with more strength.

In an embodiment, the bio-degradable polymer composition comprising: 35% to 45% (w/w) of an extrusion grade bio-degradable polymer; 55% to 65% (w/w) of an injection grade bio-degradable polymer; wherein both the extrusion grade bio-degradable polymer and the injection grade bio-degradable polymer are starch based bio-degradable polymers; and a biopolymer additive in an amount of 4% to 10% (w/w). The biopolymer additive in an amount of 4% to 10 % (w/w) is added to the composition to get a good release property which can also help in keeping the control on tube diameter. It would be understood by those skilled in the art that the granules utilized for the formation of tube sleeves may be of one polymer or may be a combination of several different polymers.

Therefore, the use of above mentioned temperature at different zones of the extruder, addition of biopolymer additive in an amount of 4% to 10 % (w/w) and the said selection of right calibration ring diameter to obtain the desired result (calibration) ring are important for the production of the bio-degradable tube sleeves with proper diameter, in accordance with the present disclosure.

In another embodiment, to form the shoulder of the bio-degradable tube, the compression molding technique is employed. The properties of the bio-degradable polymers inhibit the formation of separate shoulders with one particular grade of bio-degradable material by compression molding method. Further, there is no suitable standalone biopolymer grade available and therefore, the fusion of the shoulders and the sleeves is not possible for the production of bio-degradable tubes with one single grade. Hence, according to an aspect of the invention, a blend composition of the two bio-degradable materials for the production of tube shoulders may preferably include 35% to 45% (w/w) of an extrusion grade bio-degradable polymer, such as GF 106/2 and 55% to 65% (w/w) of an injection molding grade bio-degradable polymer, such as GS 2189.

The present disclosure further provides a process of manufacturing the bio-degradable tube from the bio-degradable polymer composition comprising: placing the bio-degradable polymer composition comprising: 20% to 50% (w/w) of an extrusion grade bio-degradable polymer; 50% to 80% (w/w) of an injection grade bio-degradable polymer; wherein both the extrusion grade bio-degradable polymer and the injection grade bio-degradable polymer are starch based bio-degradable polymers; and a biopolymer additive, in an amount of 4% to 10% (w/w) on the weight of the composition, inside the mold cavity which had the shape and size of the shoulder of the tube to be formed; ramming a section carrying the sleeve to form the shoulder of the tube; and fusing the shoulder of the tube with the sleeve, to obtain the bio-degradable tube.

An embodiment of the present disclosure provides a process of manufacturing the bio-degradable tube from the bio-degradable polymer composition comprising: placing the bio-degradable polymer composition comprising: 30% to 50% (w/w) of an extrusion grade bio-degradable polymer; 50% to 70% (w/w) of an injection grade bio-degradable polymer; wherein both the extrusion grade bio-degradable polymer and the injection grade bio-degradable polymer are starch based bio-degradable polymers; and a biopolymer additive, in an amount of 4% to 10% (w/w) on the weight of the composition, inside the mold cavity which had the shape and size of the shoulder of the tube to be formed; ramming a section carrying the sleeve to form the shoulder of the tube; and fusing the shoulder of the tube with the sleeve, to obtain the bio-degradable tube.

During the process of shoulder formation, temperature, pressure, and other machine parameters are controlled. In an embodiment, the machine parameters include temperature of the mold cavity, temperature of the resin (bio-degradable polymer), pressure applied to the mold cavity, are controlled based on the bio-degradable polymer used. The parameters such as the rate of change of temperature inside the cavity to facilitate the cooling of the polymer and proper fusion of the resin with the sleeve, the vacuum conditions between the male female sections, and the calibration of the cavity are also controlled by the bio-degradable polymer used.

In another embodiment, the temperature of the mold cavity is between 20°C to 35°C.

In yet another embodiment, the temperature of the resin (bio-degradable polymer) is between 145°C to 190°C.

In still another embodiment, the pressure applied to the mold cavity is between 45 to 50 bars for more than 40 mm diameter tubes.

Therefore, the production bio-degradable tubes employing the compression molding technique may provide efficient and cheap solution to bio-degradable tube manufacturing.

### EXAMPLES

The disclosure will now be illustrated with working examples, which is intended to illustrate the working of the disclosure and not intended to take restrictively to imply any limitations on the scope of the present disclosure. Other embodiments are also possible.

### Example 1 (comparative):

100 % (w/w) injection molding grade bio-degradable polymer (GS 2189) composition was prepared for manufacturing the shoulder of a bio-degradable tube. No extrusion grade bio-degradable polymer was added.

### Example 2 (comparative):

80% (w/w) Injection molding bio-degradable polymer (GS 2189) and 20% (w/w) Extrusion grade bio-degradable polymer (GF 106/2) composition was prepared for manufacturing the shoulder of a bio-degradable tube.

### Example 3:

50 % (w/w) Injection molding bio-degradable polymer (GS 2189) and 50 % (w/w) Extrusion grade bio-degradable polymer (GF 106/2) composition was prepared for manufacturing the shoulder of a bio-degradable tube. A suitable biopolymer additive can be added to the composition.

### Example 4:

70 % (w/w) Injection molding bio-degradable polymer (GS 2189) and 30 % (w/w) Extrusion grade bio-degradable polymer (GF 106/2) composition was prepared for manufacturing the shoulder of a bio-degradable tube; a suitable biopolymer additive can be added to the composition.

### Example 5:

The following compositions prepared by Example 1, Example 2, Example 3 and Example 4 were subjected to compression molding technique for preparation of tube shoulder.

The bio-degradable polymer composition prepared by Example 1, or Example 2 was placed inside the mold cavity which has the shape and size of the shoulder of the tube to be formed. The temperature range of the melt extruder was kept between 45°C to 170°C zone wise as given below.

**Table 2.1: Temperature range of the shoulder for Example 1 and Example 2:**

| PROCESS: HEADING By compression molding | | | | | | | | | |
|---|---|---|---|---|---|---|---|---|---|
| PROCESS PARAMETER: | | | | | M/c SPEED 45 TPM | | | | |
| ZONE | 1 | 2 | 3 | 4 | | 5 | 6 | 7 | 8 |
| TEMPERATURES | 45 | 145 | 160 | 160 | | 160 | 160 | 160 | 170 |
| COOLING WATER TEMPERATURE | | | | 15 to 25°C | | | | | |

The shoulder of the tube thus formed by Example 1, or Example 2 was getting cooled faster and therefore ramming and fusing with the sleeve was weak and inconsistent.

In case of example 1 and 2, the shoulder to sleeve bond was weak and consistency was not observed.

This is regarding the blend percentage used to get the biodegradable shoulder in all the four trials. when the blend of the biodegradable Shoulder material consist of more than 70 % (w/w) of the Injection molding bio-degradable polymer (GS 2189) and Less than 30 % Extrusion grade bio-degradable polymer (GF 106/2) the bond between shoulder and sleeve found to be weaker. The bond between tube sleeve (body) and shoulder is tested with peel of test of sleeve with respective shoulder. Where the bond is weak the sleeve to shoulder bond is found to be easily peelable and when the blend material combination is right, the bond between shoulder and sleeve is very difficult to peel off.
The bio-degradable polymer composition prepared by Example 3, or Example 4 was placed inside the mold cavity which has the shape and size of the shoulder of the tube to be formed. The temperature was between 45-175°C.

**Table 2.2: Temperature range of the shoulder for Example 3 and Example 4:**

| PROCESS: HEADING By compression molding | | | | | | | | | |
|---|---|---|---|---|---|---|---|---|---|
| PROCESS PARAMETER: | | | | | M/c SPEED 45 TPM | | | | |
| ZONE | 1 | 2 | 3 | 4 | | 5 | 6 | 7 | 8 |
| TEMPERATURES | 45 | 145 | 160 | 160 | | 170 | 170 | 175 | 175 |
| COOLING WATER TEMPERATURE | | | | 20 to 35°C | | | | | |

The shoulder of the tube thus formed in Example 4 was getting cooled slowly, and therefore ramming and fusing with the sleeve was found to be strong.

The shoulder to sleeve bond was found to be strong for the trial number 4. Was found to be more stronger than the shoulder bond for the trial three. The shoulder in this case was getting cooled slowly. Hence the Tight control temperature parameters in cooling of mold cavity also found to be key control to have a right shoulder formation, giving good shoulder bond

It would be understood by those skilled in the art that the bio-degradable polymer used for the formation of shoulders may be different from the bio-degradable polymer used for the formation of sleeves. Further, the polymer used for the formation of shoulder can be bio-degradable, whereas the sleeves of the tube can be formed of plastic polymers and vice-versa. It would also be understood that the granules of the bio-degradable polymer used for the formation of shoulders can be of a single bio-degradable grade of the biopolymer or can be a combination of different bio-degradable polymers as described in the composition of the blend.

Although the subject matter has been described in considerable detail with reference to certain preferred embodiments thereof, other embodiments are possible.

## Claims

1. A biodegradable polymer composition comprising:
30% to 50% (w/w) of an extrusion grade bio-degradable polymer; and
50% to 70% (w/w) of an injection molding grade bio-degradable polymer,
wherein both the extrusion grade bio-degradable polymer and the injection grade bio-degradable polymer are starch based bio-degradable polymers.

2. The composition as claimed in claim 1, further comprising:
a biopolymer additive, in an amount of 4% to 10% (w/w) on the weight of the composition.

3. The biodegradable polymer composition as claimed in claim 1, comprising:
35% to 45% (w/w) of an extrusion grade bio-degradable polymer; and
55% to 65% (w/w) of an injection molding grade bio-degradable polymer.

4. A bio-degradable article made of the polymer composition as claimed in any of the claims 1 to 3.

5. The bio-degradable article as claimed in claim 4, wherein the article is a tube.

6. A process of manufacturing a sleeve of a bio-degradable tube from the bio-degradable polymer composition as claimed in claim 1, said process comprising:
heating the granules of bio-degradable polymer composition and passing it through a circular die;
passing the heated bio-degradable polymer along a heated chamber to obtain a molten bio-degradable polymer; and
forcing out the molten bio-degradable polymer from a small opening or a die in the desired shape of the finished product.

7. The process as claimed in claim 6, wherein the biodegradable polymer composition comprising 35% to 45% (w/w) of an extrusion grade bio-degradable polymer; 55% to 65% (w/w) of an injection grade bio-degradable polymer; and a biopolymer additive in an amount of 4% to 10% (w/w).

8. A process of manufacturing a bio-degradable tube from the bio-degradable polymer composition as claimed in claim 1, said process comprising:
placing the bio-degradable polymer composition comprising: 30% to 50% (w/w) of an extrusion grade bio-degradable polymer; 50% to 70% (w/w) of an injection molding grade bio-degradable polymer; and a biopolymer additive, in an amount of 4% to 10% (w/w) on the weight of the composition, inside the mold cavity which had the shape and size of the shoulder of the tube to be formed;
ramming a section carrying the sleeve to form the shoulder of the tube; and
fusing the shoulder of the tube with the sleeve to obtain the bio-degradable tube.

9. The process as claimed in claim 6 or claim 8, wherein the machine parameters include temperature of the mold cavity, temperature of the resin (bio-degradable polymer), pressure applied to the mold cavity, are controlled based on the bio-degradable polymer used.

10. The process as claimed in claim 9, wherein the temperature of the shoulder mold cavity is between 20°C to 35°C.

11. The process as claimed in claim 9, wherein the temperature of the resin (bio-degradable polymer) is between 145°C to 190°C to get suitable biodegradable sleeve and shoulder Property

12. The process as claimed in claim 9, wherein the pressure applied to the mold cavity is between 45 to 50 Bars for more than 40 mm diameter tubes.

## Patentansprüche

1. Biologisch abbaubare Polymerzusammensetzung, enthaltend:
30% bis 50% (w/w) eines biologisch abbaubaren Polymers in Extrusionsgüte; und 50% bis 70% (w/w) eines biologisch abbaubaren Polymers in Spritzgussgüte, wobei sowohl das biologisch abbaubare Polymer in Extrusionsgüte als auch das biologisch abbaubare Polymer in Spritzgussgüte biologisch abbaubare Polymere auf Stärkebasis sind.

2. Zusammensetzung nach Anspruch 1, ferner enthaltend:
ein Biopolymeradditiv in einer Menge von 4% bis 10% (w/w) bezogen auf das Gewicht der Zusammensetzung.

3. Biologisch abbaubare Polymerzusammensetzung nach Anspruch 1, enthaltend:
35% bis 45% (w/w) eines biologisch abbaubaren Polymers in Extrusionsgüte; und
55% bis 65% (w/w) eines biologisch abbaubaren Polymers in Spritzgussgüte.

4. Biologisch abbaubarer Artikel, hergestellt aus einer Polymerzusammensetzung gemäß einem der Ansprüche 1 bis 3.

5. Biologisch abbaubarer Artikel nach Anspruch 4, wobei der Artikel ein Rohr ist.

6. Verfahren zum Herstellen einer Hülse eines biologisch abbaubaren Rohres aus der biologisch abbaubaren Polymerzusammensetzung gemäß Anspruch 1, wobei das Verfahren umfasst:
das Erwärmen des Granulats der biologisch abbaubaren Polymerzusammensetzung und das Hindurchleiten durch eine kreisförmige Matrize;
das Entlangführen des erwärmten biologisch abbaubaren Polymers an einer erwärmten Kammer, um ein geschmolzenes biologisch abbaubares Polymer zu erhalten; und
das Herauspressen des geschmolzenen biologisch abbaubaren Polymers aus einer kleinen Öffnung oder einer Matrize in der gewünschten Form des Endprodukts.

7. Verfahren nach Anspruch 6, wobei die biologisch abbaubare Polymerzusammensetzung 35% bis 45% (w/w) eines biologisch abbaubaren Polymers in Extrusionsgüte, 55% bis 65% (w/w) eines biologisch abbaubaren Polymers in Spritzgussgüte und ein Biopolymeradditiv in einer Menge von 4% bis 10% (w/w) enthält.

8. Verfahren zum Herstellen eines biologisch abbaubaren Rohres aus einer biologisch abbaubaren Polymerzusammensetzung gemäß Anspruch 1, wobei das Verfahren umfasst:
das Platzieren der biologisch abbaubaren Polymerzusammensetzung, die 30% bis 50% (w/w) eines biologisch abbaubaren Polymers in Extrusionsgüte; 50% bis 70% (w/w) eines biologisch abbaubaren Polymers in Spritzgussgüte und ein Biopolymeradditiv in einer Menge von 4% bis 10% (w/w) bezogen auf das Gewicht der Zusammensetzung enthält, in einem Formenhohlraum, der die Form und die Größe der zu formenden Rohrschulter aufweist;
das Vortreiben eines die Hülse tragenden Abschnitts, um die Schulter des Rohres zu bilden; und das Verschmelzen der Schulter des Rohres mit der Hülse, um ein biologisch abbaubares Rohr zu erhalten.

9. Verfahren nach Anspruch 6 oder 8, wobei die Maschinenparameter die Temperatur des Formenhohlraums, die Temperatur des Harzes (des biologisch abbaubaren Polymers) und den auf den Formenhohlraum ausgeübten Druck umfassen und basierend auf dem verwendeten biologisch abbaubaren Polymer gesteuert werden.

10. Verfahren nach Anspruch 9, wobei die Temperatur des Schulterformenhohlraums zwischen 20°C und 30°C liegt.

11. Verfahren nach Anspruch 9, wobei die Temperatur des Harzes (des biologisch abbaubaren Polymers) zwischen 145°C und 190°C liegt, um eine angemessene Eigenschaft der biologisch abbaubaren Hülse und Schulter zu erlangen.

12. Verfahren nach Anspruch 9, wobei der auf den Formenhohlraum ausgeübte Druck bei Rohren von mehr als 40 mm Durchmesser zwischen 45 und 50 Bar beträgt.

## Revendications

1. Composition de polymères biodégradables comprenant :
30 % à 50 % (en poids/poids) d'un polymère biodégradable apte à l'extrusion ; et
50 % à 70 % (en poids/poids) d'un polymère biodégradable apte au moulage par injection,
dans lequel à la fois le polymère biodégradable apte à l'extrusion et le polymère biodégradable apte à l'injection sont des polymères biodégradables à base d'amidon.

2. Composition selon la revendication 1, comprenant en outre :
un additif biopolymère, en une quantité de 4 % à 10 % (en poids/poids) sur le poids de la composition.

3. Composition de polymères biodégradables selon la revendication 1, comprenant : 35 % à 45 % (en poids/poids) d'un polymère biodégradable apte à l'extrusion ; et 55 % à 65 % (en poids/poids) d'un polymère biodégradable apte au moulage par injection.

4. Article biodégradable fait de la composition de polymères selon l'une quelconque des revendications 1 à 3.

5. Article biodégradable selon la revendication 4, dans lequel l'article est un tube.

6. Procédé de fabrication d'un manchon d'un tube biodégradable à partir de la composition de polymères biodégradables selon la revendication 1, ledit procédé comprenant :
le chauffage des granulés de la composition de polymère biodégradable et leur passage à travers une filière circulaire ;
le passage du polymère biodégradable chauffé le long d'une chambre chauffée pour obtenir un polymère biodégradable fondu ; et
la sortie en force du polymère biodégradable fondu à partir d'une petite ouverture ou d'une filière sous la forme souhaitée du produit fini.

7. Procédé selon la revendication 6, dans lequel la composition de polymère biodégradable comprenant 35 % à 45 % (en poids/poids) d'un polymère biodégradable apte à l'extrusion ; 55 % à 65 % (en poids/poids) d'un polymère biodégradable apte à l'injection ; et un additif biopolymère en une quantité de 4 % à 10 % (en poids/poids).

8. Procédé de fabrication d'un tube biodégradable à partir de la composition de polymères biodégradables selon la revendication 1, ledit procédé comprenant :
le placement de la composition de polymères biodégradables comprenant : 30 % à 50 % (en poids/poids) d'un polymère biodégradable apte à l'extrusion ; 50 % à 70 % (en poids/poids) d'un polymère biodégradable apte au moulage par injection ; et un additif biopolymère, en une quantité de 4 % à 10 % (en poids/poids) sur le poids de la composition, à l'intérieur de la cavité d'un moule qui a la forme et la taille de l'épaulement du tube à former ;
le foulage d'une section portant le manchon pour former l'épaulement du tube ; et
la fusion de l'épaulement du tube avec le manchon pour obtenir le tube biodégradable.

9. Procédé selon la revendication 6 ou la revendication 8, dans lequel les paramètres de la machine comprennent la température de la cavité du moule, la température de la résine (polymère biodégradable), la pression appliquée à la cavité du moule, sont contrôlés sur la base du polymère biodégradable utilisé.

10. Procédé selon la revendication 9, dans lequel la température de la cavité du moule d'épaulement est située entre 20 °C à 35 °C.

11. Procédé selon la revendication 9, dans lequel la température de la résine (polymère biodégradable) est située entre 145 °C à 190 °C pour obtenir une propriété appropriée de manchon et d'épaulement biodégradables.

12. Procédé selon la revendication 9, dans lequel la pression appliquée à la cavité du moule est située entre 45 à 50 bar pour les tubes d'un diamètre de plus de 40 mm.
